(19) Europäisches Patentamt

European Patent Office

Office européen des brevets

(11) **EP 4 590 049 A1**

(12) **EUROPEAN PATENT APPLICATION**
published in accordance with Art. 153(4) EPC

(43) Date of publication:
**23.07.2025  Bulletin 2025/30**

(21) Application number: **24741154.9**

(22) Date of filing: **04.01.2024**

(51) International Patent Classification (IPC):
*H04W 72/12* (2023.01)

(86) International application number:
**PCT/CN2024/070676**

(87) International publication number:
**WO 2024/149155 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023  CN 202310094391**

(71) Applicant: ZTE Corporation
**Shenzhen, Guangdong  518057 (CN)**

(72) Inventors:
• XING, Weimin
  **Shenzhen, Guangdong 518057 (CN)**
• LU, Youxiong
  **Shenzhen, Guangdong 518057 (CN)**
• HU, Yuzhou
  **Shenzhen, Guangdong 518057 (CN)**
• HE, Haigang
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **DIRECT CONNECTION COMMUNICATION METHOD, COMMUNICATION APPARATUS, AND STORAGE MEDIUM**

(57)    Provided are a direct connection communication method, a communication apparatus, and a computer-readable storage medium. The direct connection communication method comprises: within a channel occupancy time, on the basis of a sorting sequence of N direct connection communication channels to be sent, selecting M direct connection communication channels from the N direct connection communication channels, N being a positive integer, and M being a positive integer less than or equal to N; and sending the M direct connection communication channels.

```
Within a channel occupancy time, on the basis of a
sorting sequence of N direct connection communication
channels to be sent, select M direct connection
communication channels from the N direct connection
communication channels                              S101

        ↓

Send the M direct connection communication channels  S102
```

FIG. 3

**Description**

The present disclosure claims priority to Chinese Patent Application No. 202310094391.7, filed on January 13, 2023, which is incorporated in this application by reference in its entirety.

TECHNICAL FIELD

The present disclosure relates to the technical field of communication, and in particular, to a direct communication method, a communication apparatus and a storage medium.

BACKGROUND

Direct communication is wireless communication performed directly between two or more terminals. In such communication, two or more terminals that are geographically close to each other can communicate directly without any network device. Direct communication is widely used in daily life. Exemplarily, a direct communication method includes but is not limited to Device to Device (D2D) communication, such as early warning communication of disasters such as earthquakes and fires, and vehicle to everything (V2X) communication of remote driving and unmanned driving, etc., for example.

SUMMARY

In an aspect, a direct communication method is provided, and applied to a first terminal. The direct communication method includes: selecting M direct communication channels from N direct communication channels to be sent based on a sorting order of the N direct communication channels, within a channel occupancy time, where N is a positive integer, and M is a positive integer less than or equal to N; and sending the M direct communication channels.

In another aspect, a communication apparatus is provided. The communication apparatus includes: a processing module, configured to select M direct communication channels from N direct communication channels to be sent based on a sorting order of the N direct communication channels, within a channel occupancy time, where N is a positive integer, and M is a positive integer less than or equal to N; and a communication module, configured to send the M direct communication channels.

In yet another aspect, a communication apparatus is provided, and includes: a memory and a processor; where the memory and the processor are coupled; the memory is configured to store instructions executable by the processor; and when the processor executes the instructions, the communication apparatus implements the direct communication method as described in any one of the above aspect or embodiments.

In yet another aspect, a computer readable storage medium is provided, and the computer readable storage medium has computer program instructions stored thereon, where the computer program instructions, when being executed by a computer, implement the direct communication method as described in any one of the above aspect or embodiments.

In yet another aspect, a computer program product is provided, and the computer program product includes computer program instructions, where the computer program instructions, when being executed by a processor, implement the direct communication method as described in any one of the above aspect or embodiments.

BRIEF DESCRIPTION OF THE DRAWINGS

In order to explain technical solutions in the present disclosure more clearly, the drawings that need to be used in some embodiments of the present disclosure will be introduced briefly below. Obviously, the drawings in the following description are merely drawings of some embodiments of the present disclosure, and other drawings may also be obtained according to these drawings for those ordinary skilled in the art.

FIG. 1 is a structural schematic diagram of a direct communication system according to some embodiments.
FIG. 2 is a structural schematic diagram of a channel occupancy time according to some embodiments.
FIG. 3 is a flow schematic diagram of a direct communication method according to some embodiments.
FIG. 4 is a diagram of a resource configuration according to some embodiments.
FIG. 5 is a flow schematic diagram of another direct communication method according to some embodiments.
FIG. 6 is a structural schematic diagram of a communication apparatus according to some embodiments.
FIG. 7 is a structural schematic diagram of another communication apparatus according to some embodiments.

DETAILED DESCRIPTION

The technical solutions in the present disclosure will be described below clearly and completely in combination with the drawings in the present disclosure. Obviously, the embodiments described are merely some but not all of the embodiments of the present disclosure. All other embodiments obtained based on the embodiments in the present disclosure by those ordinary skilled in the art without paying any creative effort shall fall within the protection scope of the present disclosure.

It should be noted that in the present disclosure, the words such as "exemplarily" or "for example" are used to represent an example, illustration, or explanation. Any embodiment or design solution described with "exemplarily" or "for example", etc., in the present disclosure should not be construed as being preferred or advantageous over other embodiments or design solutions. Specifically, the use of the words such as "exemplarily" or "for example" is intended to present related concepts in a specific manner.

Hereinafter, expressions with the terms such as "first" and "second" are used for descriptive purposes only and cannot be understood as indicating or implying relative importance or implicitly indicating a number of the indicated technical features. Thus, features defined with expressions such as "first" and "second" may explicitly or implicitly include one or more of the features.

In the description of the present disclosure, unless otherwise specified, the symbol "/" means "or", and for example, "A/B" may mean A or B. Herein, "and/or" is merely an association relationship for describing associated objects, which represents that there may be three kinds of relationships, and for example, A and/or B may represent: only A, only B, and both A and B. In addition, "at least one" means one or more, and "a/the plurality of" means two or more.

Direct communication may also be referred to as sidelink (SL) communication, side link communication, or adjacent link communication, or PC5 interface link communication, or link communication between terminal devices, and the direct communication is wireless communication directly performed between a plurality of terminal devices (such as two terminal devices). In such direct communication, a plurality of terminal devices that are geographically close to each other can communicate directly without any network device. A data transmission in the direct communication is different from that of the typical cellular network communication, and the typical cellular network communication includes uplink (UL) transmission (that is, the terminal device sends data to the network device) and downlink (DL) transmission (that is, the network device sends data to the terminal device); however, in the direct communication, data is sent directly from a terminal device at a sending end to a terminal device at a receiving end via an air interface such as a PC5 interface, without any network device. The direct communication method includes but is not limited to Device to Device (D2D) communication, such as early warning communication of disasters such as earthquakes and fires, and vehicle-to-everything (V2X) communication of remote driving and unmanned driving, etc., for example.

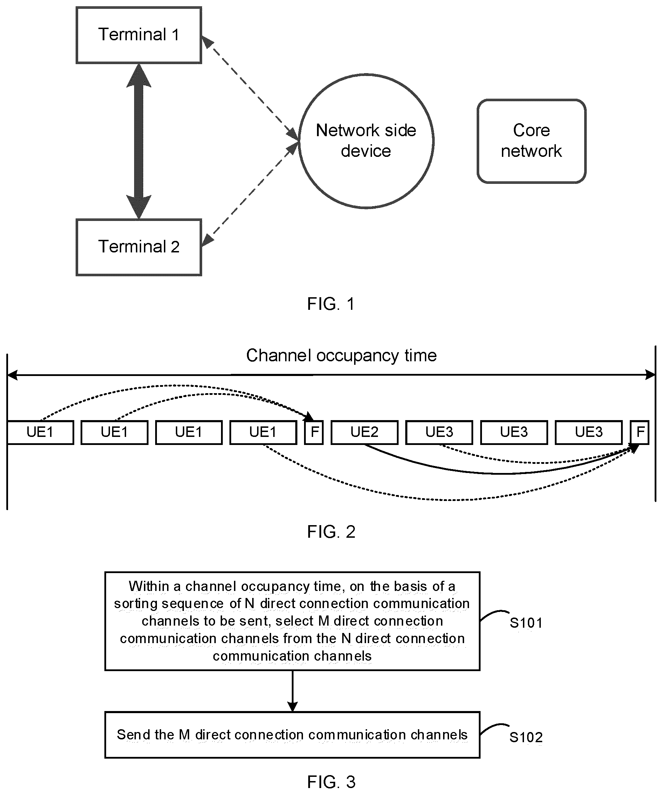

Exemplarily, FIG. 1 illustrates a structural schematic diagram of a direct communication system provided by the embodiments of the present disclosure. As shown in FIG. 1, in a direct communication system, when there is a traffic to be transmitted between terminals, traffic data thereof does not pass through the network side device (that is, without the forwarding of cellular links between the terminals and the network side device shown by dotted lines in FIG. 1), but is directly transmitted from the data source terminal (terminal 1 as shown in FIG. 1) to the target terminal (terminal 2 as shown in FIG. 1) via the sidelink. This mode of direct communication between terminal 1 and terminal 2 has features that are significantly different from the conventional cellular system communication mode: for short-range communication users who can apply direct communication, the direct communication not only saves radio spectrum resources, but also reduces the data transmission pressure of the core network, can reduce the occupation of system resources, increase the spectrum efficiency of the cellular communication system, reduce transmission power consumption of terminals, and save network operating costs to a great extent.

Herein, the terminal in the direct communication system may also be referred to as a terminal device, a user equipment (UE), a mobile station, a mobile terminal, or the like. The terminal may be a mobile phone, a tablet computer, a computer with a wireless transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, and so on. The embodiments of the present disclosure do not limit the specific technology and the specific device form adopted by the terminal device.

It should be understood that the above-mentioned communication system may also have other names (such as communication network, network system, network architecture, communication architecture, or the like), and the embodiments of the present disclosure do not impose specific limitations on this. The above-mentioned communication system is only for explaining the technical solutions of the present disclosure more clearly and does not constitute a limitation on the present disclosure. Those ordinary skilled in the art can know that, with the evolution of the network architecture and the emergence of new traffic scenarios, the technical solutions provided in the present disclosure are also applicable to similar technical problems.

In order to further understand the solutions, the channel access in the direct communication is briefly introduced below.

Currently, before a terminal sends a direct communication channel, it usually needs to enter a channel access process, which is generally called a listen before talk (LBT) process. If it is detected that a channel resource is determined to be idle within a detection duration corresponding to the LBT process, the LBT is considered successful. In a case where LBT is successful, the terminal starts a channel occupancy time (COT) and performs direct communication.

The channel occupancy time may also be referred to as Channel Occupancy (CO). A channel occupancy time may include a CO duration in the time domain. In addition, a channel occupancy time may occupy a certain bandwidth in the frequency domain, and the bandwidth includes one or more basic bandwidths, and a basic bandwidth may also be referred to as a channel or a resource block set (RB set).

A terminal, after starting a channel occupancy time, may not only transmit within the channel occupancy time, but also share the channel occupancy time with other terminals, so that the other terminals may perform a data transmission. A terminal that starts a channel occupancy time may be referred to as a starting terminal or an initiating terminal (initiating UE, IUE), and a terminal that shares a channel occupancy time may be referred to as a responding terminal (responding UE, RUE).

FIG. 2 illustrates a structural schematic diagram of a channel occupancy time. UE1 in FIG. 2 is used to represent a direct communication channel transmission sent by terminal 1 (not shown in the figure), UE2 is used to represent a direct communication channel transmission sent by terminal 2 (not shown in the figure), UE3 is used to represent a direct communication channel transmission sent by terminal 3 (not shown in the figure), and F is used to represent a time domain feedback occasion.

In some embodiments, terminal 1 is a terminal that starts the channel occupancy time shown in FIG. 2, that is, terminal 1 is a starting terminal corresponding to the channel occupancy time shown in FIG. 2. Terminal 1, after starting the channel occupancy time, may not only perform a data transmission within the channel occupancy time, but also share the channel occupancy time with terminal 2 and terminal 3, so that terminal 2 and terminal 3 may also perform a data transmission within the channel occupancy time.

In some embodiments, terminal 2 and terminal 3 share the channel occupancy time started by terminal 1, that is, terminal 2 and terminal 3 are responding terminals corresponding to the channel occupancy time and may use the channel occupancy time.

In some embodiments, the time domain feedback occasion may be used to transmit feedback information or feedback resources. Exemplarily, the time domain feedback occasion may be used to transmit a direct feedback channel, and the direct feedback channel may be a physical sidelink feedback channel. The physical sidelink feedback channel may carry various different feedback information, such as hybrid automatic repeat request-ACK (HARQ-ACK), conflict information, etc. Herein, HARQ-ACK is also referred to as HARQ information, which is used to indicate whether the data transmission is correctly received, and the conflict information is used to indicate whether a conflict occurs in a reserved resource. In some embodiments, the physical sidelink feedback channel may also carry measurement feedback information, and the measurement feedback information is used to indicate a measurement result obtained after measuring a specific reference signal. It should be understood that the present disclosure does not impose limitations on the specific content carried by the physical sidelink feedback channel.

Typically, after the terminal sends a direct communication channel transmission, the transmission will correspond to a time domain feedback occasion if feedback is enabled. As shown in FIG. 2, a feedback resource corresponding to a first direct communication channel transmission (referring to the first UE1 shown in FIG. 2) sent by terminal 1 is a first time domain feedback occasion F. Similarly, a second direct communication channel transmission (referring to the second UE1 shown in FIG. 2) and a third direct communication channel (referring to the third UE1 shown in FIG. 2) sent by terminal 1 sent by terminal 1 also correspond to the first time domain feedback occasion F. In addition, a feedback resource corresponding to a fourth direct communication channel transmission (referring to the fourth UE1 shown in FIG. 2) sent by terminal 1 is a second time domain feedback occasion F. Similarly, a direct communication channel transmission (referring to the first UE2 shown in FIG. 2) sent by terminal 2 and a direct communication channel transmission (referring to the first UE3 shown in FIG. 2) sent by terminal 3 also correspond to the second time domain feedback occasion F. To sum up, it can be seen that a time domain feedback occasion F may correspond to a plurality of transmissions, that is, a terminal may need to send or receive a plurality of pieces of feedback information simultaneously. However, due to limitations of the terminal's transmission power or the upper limit of the number of channels that the terminal can support to send simultaneously, the terminal may not be able to send all the direct communication channels to be sent.

In this regard, the embodiments of the present disclosure provide a direct communication method, and the method includes: selecting M direct communication channels from N direct communication channels to be sent based on a sorting order of the N direct communication channels, within a channel occupancy time, where N is a positive integer, and M is a positive integer less than or equal to N; and sending the M direct communication channels. Based on this, suitable direct communication channels may be selected to be sent, according to the sorting order within a channel occupancy time of the direct communication, thereby improving communication efficiency.

It should be noted that the direct communication method provided in the embodiments of the present disclosure may be applied to systems of various communication standards. For example, a system to which the direct communication method provided in the embodiments of the present disclosure may be applied includes but is not limited to a long term evolution (LTE) system, a system with various versions based on LTE evolution, a 5th generation (5G) system, and a next generation communication system such as new radio (NR), etc. In addition, the direct communication method provided in the embodiments of the present disclosure may also be applied to future-oriented communication technologies and the like.

As shown in FIG. 3, a direct communication method is provided in an embodiment of the present disclosure, and is introduced below by taking an execution entity as a first terminal as an example. With reference to FIG. 3, the method includes the following steps S101 to S102.

S101: select M direct communication channels from N direct communication channels to be sent based on a sorting order of the N direct communication channels, within a channel occupancy time.

N is a positive integer and M is a positive integer less than or equal to N.

In some embodiments, the direct communication channel includes at least one of the following types: a physical sidelink control channel (PSCCH), a physical sidelink sharing channel (PSSCH), a physical sidelink feedback channel (PSFCH), a direct synchronization channel, and a direct reference channel. In an embodiment, the direct communication channel may be a PSFCH. The direct synchronization channel is a channel used to achieve time synchronization. Exemplarily, the direct synchronization channel may include a physical sidelink broadcast channel (PSBCH), a primary sidelink synchronization channel (primary sidelink synchronization signal, PSSS) and/or a secondary sidelink synchronization channel (secondary sidelink synchronization signal, SSSS). The physical sidelink feedback channel may carry HARQ-ACK, conflict information, or the like, which is not limited to the present disclosure.

As an example, the N direct communication channels may be N PSFCHs.

In some embodiments, the direct communication channel in the embodiments of the present disclosure may be classified into an LTE direct communication channel, an NR direct communication channel, or a direct communication channel under a future network (such as 6G), based on communication standards. It should be understood that there may be other classification ways for direct communication channels, and the present disclosure does not impose any specific limitation on this.

In some embodiments, the N direct communication channels include all direct communication channels to be sent by the first terminal; or the N direct communication channels include all direct communication channels to be sent by the first terminal within a bandwidth corresponding to the channel occupancy time; or the N direct communication channels include all direct communication channels to be sent by the first terminal in one or more resource block sets.

Exemplarily, the step S101 may be implemented as that: the first terminal determines one or more selected resource block sets, determines a sorting order of N direct communication channels to be sent on the one or more selected resource block sets, and selects M direct communication channels from the N direct communication channels to be sent based on the sorting order of the N direct communication channels.

It should be understood that there may be other possible descriptions for the above-mentioned N direct communication channels. For example, all direct communication channels to be sent by the first terminal may also be described as all direct communication channels scheduled to be sent by the first terminal. The embodiments of the present disclosure do not impose specific limitations on this.

In some embodiments, the above-mentioned one or more resource block sets satisfy at least one of:

a condition that the one or more resource block sets are resource block sets detected as idle by the first terminal;
a condition that the one or more resource block sets belong to a bandwidth corresponding to the channel occupancy time;
a condition that the one or more resource block sets are continuous in a frequency domain; and
a condition that the one or more resource block sets at least include a direct communication channel related to a second terminal, where the second terminal is a terminal that starts the channel occupancy time.

In some embodiments, in a case where the power required for sending the above-mentioned N direct communication channels is greater than the maximum transmission power of the first terminal, or N is greater than the maximum number of direct communication channels supported by the first terminal to send simultaneously, the step S101 is performed, so that the first terminal can select M direct communication channels from the N direct communication channels to send normally when the N direct communication channels to be sent exceed the sending ability of the first terminal.

As an example, in a case where N is less than or equal to the maximum number Nmax of direct communication channels supported by the first terminal to send simultaneously, and the sum of the power required for the N direct communication channels is greater than the maximum transmission power of the first terminal, the M direct communication channels include first M direct communication channels sorted from high to low in the sorting order of the N direct communication channels.

As another example, in a case where N is greater than the maximum number Nmax of the direct communication channels supported by the first terminal to send simultaneously, and the sum of the power required for the N direct communication channels is less than or equal to the maximum transmission power of the first terminal, the M direct communication channels include first Nmax direct communication channels sorted from high to low in the sorting order of the N direct communication channels.

As yet another example, in a case where N is greater than the maximum number Nmax of the direct communication channels supported by the first terminal to send simultaneously, and the sum of the power required for the N direct communication channels is greater than the maximum transmission power of the first terminal, the M direct communication channels include first M direct communication channels sorted from high to low in the sorting order of the N direct communication channels.

In some embodiments, N is equal to M. For example, in a case where the power required for sending the above-mentioned N direct communication channels is less than or equal to the maximum transmission power of the first terminal, and N is less than or equal to the maximum number Nmax of direct communication channels supported by the first terminal to send simultaneously, the M direct communication channels sent by the first terminal may be the N direct communication channels themselves. Furthermore, in the case where the first terminal sends the N direct communication channels themselves, the N direct communication channels may also be N direct communication channels sorted in the sorting order. It should be understood that in this case, it may be considered that the process of selecting M direct communication channels from the N direct communication channels is still performed, and the difference is that the M direct communication channels here are the N direct communication channels themselves.

In some embodiments, the power required for sending the M direct communication channels is less than or equal to the maximum transmission power of the first terminal, and M is less than or equal to the maximum number of direct communication channels supported by the first terminal to send simultaneously. Based on this, the transmission power of the M direct communication channels may be enabled not to exceed the power limit of the first terminal, and the M direct communication channels can be sent normally.

In some embodiments, the maximum transmission power of the first terminal device is determined by the first terminal based on a pre-configuration or network device configuration, which is not limited to the embodiments of the present disclosure.

In some embodiments, the power required for the first terminal to send a plurality of direct communication channels is the power required for sending the plurality of PSFCHs according to a power control requirement.

In some other embodiments, the power required for sending a plurality of direct communication channels is the power of sending the plurality of direct communication channels and one or more common physical resource blocks (common PRBs) according to a power control requirement.

In some embodiments, a power level (power spectrum density, PSD) of a PRB occupied by a direct communication channel may be the same as or different from a power level of a common PRB, and the power level represents the power on a bandwidth unit. The present disclosure does not impose any specific limitation on this.

For ease of understanding, the case where one or more common physical resource blocks are sent while sending the plurality of direct communication channels will be explained specifically below.

In an aspect, considering an occupancy requirement in the frequency domain, sending the plurality of direct communication channels on a resource block set may not completely occupy the resource block set. Therefore, the occupied bandwidth when sending channels may be increased by sending one or more common PRBs, to satisfy the occupancy requirement. In addition, considering that there may be no direct communication channel passing on a certain time slot on some resource block sets that need to be used, one or more common PRBs may thus be sent to occupy the resource block sets.

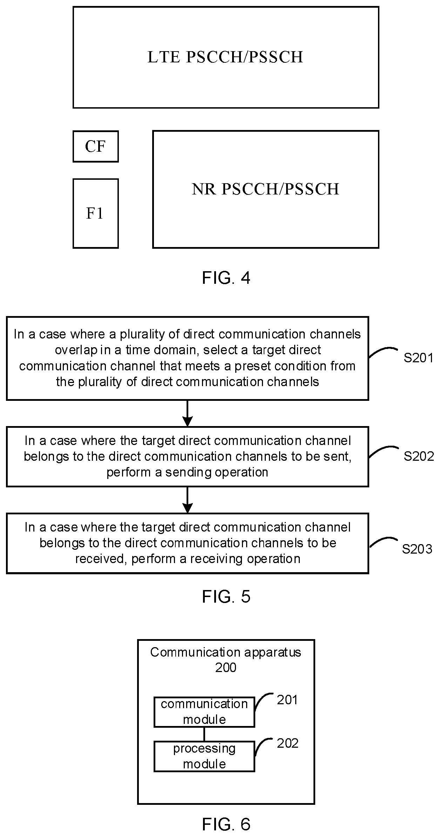

In another aspect, considering the stability of the power, after the first terminal sends a plurality of direct communication channels, the receiving end will perform automatic gain control (AGC) when receiving. In order to ensure that the receiving end can correctly estimate the power level over a period of time, the first terminal may need to send common PRBs to enable the power level at the moment of the beginning of the receiving to be equivalent to the power level over a subsequent period of time. Exemplarily, FIG. 4 outputs a diagram of a resource configuration, where in a time slot, the channels sent by the first terminal include NR PSCCH/PSSCH, CF and F1, and another terminal, such as a third terminal, transmits LTE PSCCH/PSSCH. Herein, CF is used to represent a common physical resource block, and F1 is used to represent a physical sidelink feedback channel sent by the first terminal. It can be seen that the transmission of the physical resource block enables the power level of a receiving end when receiving LTE PSCCH/PSSCH, CF and F1 to be the same as or similar to the power level of it when receiving LTE PSCCH/PSSCH and NR PSCCH/PSSCH. Therefore, it is beneficial for the receiving end to correctly estimate the power level over a period of time, thereby improving the stability of the channel reception.

In some embodiments, the M direct communication channels are the first M direct communication channels in the sorting order of the above-mentioned N direct communication channels. Herein, the sorting order is obtained by sorting the N direct communication channels based on priorities and transmission levels; a direct communication channel with a higher transmission level is located before a direct communication channel with a lower transmission level in the sorting order; and for two direct communication channels with a same transmission level, a direct communication channel with a higher priority is located before a direct communication channel with a lower priority in the sorting order.

As an example, for channel 1, channel 2, channel 3 and channel 4 among N direct communication channels, if channel 1 and channel 2 are channels of the same transmission level and the priority of channel 1 is higher than the priority of channel 2, channel 3 and channel 4 are channels of the same transmission level, and channel 3 is located at a higher transmission level than channel 1 and the priority of channel 3 is higher than the priority of channel 4, channel 1, channel 2, channel 3 and channel 4 may be sorted according to the above-mentioned sorting order from top to bottom in the following order: channel 3, channel 4, channel 1 and channel 2.

In some embodiments, the priority of a direct communication channel may be indicated by direct control information (sidelink control information, SCI) of the direct communication channel. As an example, the SCI of the direct communication channel may indicate a priority value of the direct communication channel, and the magnitude of the priority value is used to reflect the level of the priority. In an example, the priority value is an integer in a range of [1, 8]. The smaller the priority value of a direct communication channel is, the higher the priority of the direct communication channel is. It should be understood that no matter whether a direct communication channel is sent or a direct communication channel is received, a direct communication channel may correspond to a priority.

In some embodiments, in a case where the direct communication channel is a PSFCH, the priority of the PSFCH may be determined by a priority of a data transmission corresponding to the PSFCH, where the data transmission may be a transmission of a PSCCH and/or PSSCH. As an example, in a case where a PSFCH corresponds to a plurality of data transmissions, the maximum priority value or the minimum priority value of the plurality of data transmissions may be taken as the priority value of the PSFCH. Herein, a priority of a data transmission may be indicated by direct control information (sidelink control information, SCI) corresponding to the data transmission.

In some embodiments, in a case where the first terminal is a terminal that shares the channel occupancy time, the transmission level may be related to a content carried by the direct communication channel, whether the direct communication channel is related to a second terminal, and the like. The second terminal is a terminal that starts the channel occupancy time.

In some embodiments, in a case where the first terminal is a terminal that shares the channel occupancy time, the transmission levels may satisfy at least one of the following Rule 1-1 and Rule 1-2.

Rule 1-1: a transmission level of a direct communication channel related to a second terminal is higher than a transmission level of a direct communication channel unrelated to the second terminal, where the second terminal is a terminal that starts the channel occupancy time.

Rule 1-2: a transmission level of a direct communication channel carrying HARQ-ACK is higher than a transmission level of a direct communication channel carrying conflict information.

It should be understood that in a case where the first terminal is a terminal that shares the channel occupancy time, since the channel occupancy time is started by the second terminal, the direct communication channel related to the second terminal should be prioritized. Therefore, Rule 1-1 may enable to prioritize the direct communication channel related to the second terminal. In addition, since HARQ-ACK is more important than conflicting information in general, Rule 1-2 may enable to prioritize the direct communication channel carrying HARQ-ACK.

As an example, assuming that the transmission levels satisfy Rule 1-1 and Rule 1-2, and Rule 1-1 is prioritized over Rule 1-2, the direct communication channels are in the following order from high to low according to the transmission levels: a direct communication channel related to the second terminal and carrying HARQ-ACK; a direct communication channel related to the second terminal and carrying conflict information; a direct communication channel unrelated to the second terminal and carrying HARQ-ACK; and a direct communication channel unrelated to the second terminal and carrying conflict information.

As another example, assuming that the transmission levels satisfy Rule 1-1 and Rule 1-2, and Rule 1-2 is prioritized over Rule 1-1, the direct communication channels are in the following order from high to low according to the transmission levels: a direct communication channel related to the second terminal and carrying HARQ-ACK; a direct communication channel unrelated to the second terminal and carrying HARQ-ACK; a direct communication channel related to the second terminal and carrying conflict information; a direct communication channel unrelated to the second terminal and carrying conflict information.

In some embodiments, in a case where the first terminal is a terminal that shares the channel occupancy time, the transmission levels may satisfy at least one of the following Rule A and Rule B.

Rule A: The transmission levels of direct communication channels are divided into N1 transmission levels according to the degree of relevance to a second terminal, and the second terminal is a terminal that starts the channel occupancy time.

Rule B: The transmission levels of direct communication channels are divided into N2 transmission levels according to the importance of contents carried by the direct communication channels.

As an example, for Rule A, it can be set as that: the higher the relevance between the direct communication channel and the second terminal is, the higher the transmission level is. For example, a direct communication channel directly sent to the second terminal has the highest transmission level; a direct communication channel not sent to the second terminal but sent to a group or a terminal related to the second terminal has the secondary transmission level; and a direct communication channel completely unrelated to the second terminal has the last transmission level.

As an example, for Rule B, it can be set as that: the more important the content carried by the direct communication channel is, the higher the transmission level is. For example, a transmission level of a direct communication channel carrying HARQ-ACK is higher than a transmission level of a direct communication channel carrying conflict information, and a transmission level of a direct communication channel carrying conflict information is higher than a transmission level carrying measurement feedback information. It should be understood that the direct communication channel may also carry other contents, and the present disclosure does not impose any specific limitation on this. It should be noted that if the transmission level is determined by a sorting rule based on the degree of relevance to the second terminal and/or the content carried by the direct communication channel, the related order with the sorting rule which may be opposite to or different from the sorting rule illustrated above, is also included in the present disclosure.

As an instance, when the above-mentioned Rule A and Rule B are used at the same time, the above-mentioned Rule A may be prioritized over Rule B. As another instance, when the above-mentioned Rule A and Rule B are used at the same time, the above-mentioned Rule B may be prioritized over Rule A.

In addition, considering two direct communication channels with the same transmission level, a direct communication channel with a higher priority is located before a direct communication channel with a lower priority in the sorting order. Therefore, the sorting order of the N direct communication channels may satisfy the following relationship that: in a case where the N direct communication channels include first-type direct communication channels, direct communication channels among the first-type direct communication channels are sorted from high to low according to priorities, where the first-type direct communication channels are direct communication channels related to the second terminal and carrying HARQ-ACK.

Similarly, in a case where the N direct communication channels include second-type direct communication channels, third-type direct communication channels or fourth-type direct communication channels, direct communication channels among each type of direct communication channels are sorted from high to low according to priorities. Herein, the second-type direct communication channels are direct communication channels related to the second terminal and carrying conflict information. The third-type direct communication channels are direct communication channels unrelated to the second terminal and carrying HARQ-ACK. The fourth-type direct communication channels are direct communication channels unrelated to the second terminal and carrying conflict information.

In some embodiments, in a case where the first terminal is a terminal that starts the channel occupancy time, the transmission level may be related to the content carried by the direct communication channel. As an example, in a case where the first terminal is a terminal that starts the channel occupancy time, the transmission levels satisfy the following Rule 2-1.

Rule 2-1: a transmission level of a direct communication channel carrying HARQ-ACK is higher than a transmission level of a direct communication channel carrying conflict information.

It should be understood that since HARQ-ACK is more important than conflicting information in general, Rule 2-1 may enable to prioritize the direct communication channel carrying HARQ-ACK. It should be noted that Rule 2-1 is not only applicable to the case where the first terminal is a terminal that starts the channel occupancy time, but also applicable to the case where the first terminal is a terminal that shares the channel occupancy time. The embodiments of the present disclosure do not impose any specific limitation on this.

In addition, considering two direct communication channels with the same transmission level, a direct communication channel with a higher priority is located before a direct communication channel with a lower priority in the sorting order. Therefore, in a case where the N direct communication channels include direct communication channels carrying HARQ-ACK, direct communication channels among the direct communication channels carrying HARQ-ACK are sorted from high to low according to priorities, in the sorting order of the N direct communication channels.

Further, in a case where the N direct communication channels include both direct communication channels carrying HARQ-ACK and direct communication channels carrying conflict information, if transmission levels satisfy Rule 2-1, direct communication channels carrying HARQ-ACK are arranged before direct communication channels carrying conflict information, direct communication channels among the direct communication channels carrying HARQ-ACK are sorted from high to low according to priorities, and direct communication channels in the direct communication channels carrying conflict information are sorted from high to low according to priorities, in the sorting order of the N direct communication channels.

It can be seen that different transmission levels may be set in the case where the first terminal is a terminal that starts the channel occupancy time and the case where the first terminal is a terminal that shares the channel occupancy time. For example, in the case where the first terminal is a terminal that shares the channel occupancy time, the transmission levels may satisfy Rule 1-1 and Rule 1-2. In the case where the first terminal is a terminal that starts the channel occupancy time, the transmission levels may satisfy Rule 2-1. Alternatively, the same transmission levels may be set in the case where the first terminal is a terminal that starts the channel occupancy time and the case where the first terminal is a terminal that shares the channel occupancy time, and for example, the transmission levels all satisfy Rule 2-1, and the present disclosure does not impose any specific limitation on this.

In some embodiments, the rules applicable to the transmission levels and the priority order between the rules may be pre-configured by the first terminal or configured by the network device.

In some embodiments, in a case where a direct communication channel to be sent is related to the second terminal, the direct communication channel to be sent satisfies at least one of the following situation 1-1 to situation 1-4.

Situation 1-1: a receiving end of the direct communication channel to be sent includes the second terminal.

Situation 1-2: a receiving end of the direct communication channel to be sent is a terminal in a group to which the second terminal belongs.

Situation 1-3: a receiving end of the direct communication channel to be sent is a terminal having a resource conflict with the second terminal.

Situation 1-4: the direct communication channel to be sent is used to respond to a multicast transmission.

It should be understood that there may also be other descriptions for situation 1-1 to situation 1-4. For example, situation 1-4 may also be described as: COT information sent by the second terminal indicates an identity of a group to which the second terminal belongs; or COT information sent by the second terminal indicates an identity of a propagation group of the multicast transmission. It should be understood that the present disclosure does not impose any specific limitation on this.

For ease of understanding, possible implementations of the step S101 in the case where the first terminal is a terminal that shares the channel occupancy time are introduced below.

Exemplarily, the N direct communication channels include at least one of a first-type direct communication channel, a second-type direct communication channel, a third-type direct communication channel, and a fourth-type direct communication channel. The first-type direct communication channel is a direct communication channel related to the second terminal and carrying HARQ-ACK; the second-type direct communication channel is a direct communication channel related to the second terminal and carrying conflict information; the third-type direct communication channel is a direct communication channel unrelated to the second terminal and carrying HARQ-ACK; and the fourth-type direct communication channel is a direct communication channel unrelated to the second terminal and carrying conflict information. Also, the transmission levels of the first-type direct communication channel to the fourth-type direct communication channel are sorted from high to low as follows: the first-type direct communication channel, the second-type direct communication channel, the third-type direct communication channel, and the fourth-type direct communication channel. It should be understood that in some embodiments, the transmission level of the second-type direct communication channel may be lower than that of the third-type direct communication channel, and the transmission level of the second-type direct communication channel being higher than that of the third-type direct communication channel is taken as an example for explanation here, which is not limited in the present disclosure.

In some embodiments, as shown in Formula (1), M satisfies the following relationship:

$$\mathrm{M} \ \geq \ \max\left(1, \textstyle\sum_{i=1}^{k} x_i\right) \qquad\qquad \text{Formula (1).}$$

Herein, i is a priority value. When i takes any integer value from 1 to 8, $x_i$ is the number of direct communication channels with a priority value of i among the first-type direct communication channels; when i takes any integer value from 9 to 16, $x_i$ is the number of direct communication channels with a priority value of i-8 among the second-type direct communication channels; when i takes any integer value from 17 to 24, $x_i$ is the number of direct communication channels with a priority value of i-16 among the third-type direct communication channels; and when i takes any integer value greater than 24, $x_i$ is the number of direct communication channels with a priority value of i-24 among the fourth-type direct communication channels. It should be understood that the value range of the priority value i being an integer in [1,8], and the smaller the priority value of a direct communication channel being, the higher the priority of the direct communication channel being, are taken as an example for explanation here. In practical applications, there may be other design methods. For example, the smaller the priority value is, the lower the priority of the direct communication channel is. However, in this case, if i takes any integer value from 1 to 8, $x_i$ is the number of direct communication channels with a priority value of 9-i among the first-type direct communication channels; if i takes any integer value from 9 to 16, $x_i$ is the number of direct communication channels with a priority value of 17-i among the first-type direct communication channels; if i takes any integer value from 17 to 24, $x_i$ is the number of direct communication channels with a priority value of 25-i among the first-type direct communication channels... and so on, which will not be repeated.

In some embodiments, k is the maximum integer value among all integer values that k can take, in a case of enabling the power required for sending $\max\left(1, \sum_{i=1}^{k} x_i\right)$ direct communication channels to be less than or equal to the maximum transmission power of the first terminal.

In some embodiments, if there is no k value that enables the power required for sending $\max\left(1,\sum_{i=1}^{k} x_i\right)$ direct communication channels to be less than or equal to the maximum transmission power of the first terminal, k is 0.

In some embodiments, M is the minimum integer value that enables Formula (1) to hold true, and for example, M may be $\max\left(1,\sum_{i=1}^{k} x_i\right)$.

In some embodiments, as shown in Formula (2), M also satisfies the following relationship:

$$M \leq N_{max} \qquad\qquad \text{Formula (2).}$$

In some embodiments, M is the maximum integer value that enables Formula (1) and Formula (2) to hold true simultaneously.

It can be understood that the above embodiments are described by taking four different types of direct communication channels as an example. When the direct communication channels are divided into a plurality of types in other forms, the above method is still applicable. For example, the transmission levels of the direct communication channels may be divided into N1 transmission levels according to the degree of relevance to the second terminal, and the second terminal is a terminal that starts the channel occupancy time, and at the same time, the transmission levels of the direct communication channels are divided into N2 transmission levels according to the importance of the contents carried by the direct communication channels, and thus, the transmission levels may be N1*N2 transmission levels.

As an example, in a case where the direct communication channels are divided into at least z types in other forms, M satisfies Formula (1). Herein, when i takes any integer value from 8 * (z -1) + 1 to 8 * z, $M_i$ is the number of direct communication channels with a priority of i - 8 * (x - 1) among the z-th type of direct communication channels.

S102: send the M direct communication channels.

In some embodiments, in a case where the first terminal is a terminal that shares the channel occupancy time, the step S102 may be implemented as that: when the M direct communication channels include a direct communication channel related to the second terminal, send the M direct communication channels. Based on this, it may be ensured that at least one of the direct communication channels sent by the first terminal is related to the second terminal.

Furthermore, in a case where the M direct communication channels do not include a direct communication channel related to the second terminal, the first terminal may abandon sending the M direct communication channels, that is, no longer perform the step S102. In this way, it may be enabled that the direct communication channels sent by the first terminal at least include one direct communication channel related to the second terminal.

In some embodiments, the first terminal may determine whether to send a direct communication channel unrelated to the second terminal according to first information. Exemplarily, the above-mentioned method further includes: acquiring first information, where the first information is used to configure whether the first terminal is allowed to send a direct communication channel unrelated to the second terminal. The first information may be pre-configured by the first terminal; alternatively, the first information may also be configured by a network device, and for example, the network device may send a configuration signaling or a pre-configuration instruction carrying the first information to the first terminal; alternatively, the first information may also be configured by the second terminal, or the first information may be indicated by the second terminal to the first terminal by sending SCI or other signalings. The embodiments of the present disclosure do not impose any specific limitation on the source of the first information.

As an example, in a case where the M direct communication channels only include direct communication channels unrelated to the second terminal, if the first information indicates that the first terminal is not allowed to send a direct communication channel unrelated to the second terminal, the first terminal abandons sending the M direct communication channels.

As another example, in a case where the M direct communication channels include both direct communication channels unrelated to the second terminal and direct communication channels related to the second terminal, if second information indicates that the first terminal is not allowed to send a direct communication channel unrelated to the second terminal, the first terminal only sends the direct communication channels related to the second terminal among the M direct communication channels, or the first terminal abandons sending the M direct communication channels.

Taking the first-type direct communication channel to the fourth-type direct communication channel shown above as an example, in a case where the first information indicates that the first terminal is allowed to send a direct communication channel unrelated to the second terminal, the first terminal may send all types of channels among the first-type direct communication channel, the second-type direct communication channel, the third-type direct communication channel and the fourth-type direct communication channel.

In a case where the first information indicates that the first terminal is not allowed to send a direct communication channel unrelated to the second terminal, the first terminal may send the first-type direct communication channel and the second-type direct communication channel.

In some embodiments, the step S102 may be implemented as that: the first terminal performs LBT detection on one or more resource block sets on which the M direct communication channels are located, and sends direct communication channels located on resource block sets with successful LBT among the M direct communication channels.

In some embodiments, the step S102 may be implemented as: performing LBT detection on one or more resource block sets on which the M direct communication channels are located, and sending direct communication channels located on resource block sets with successful LBT and continuous frequency domain, among the M direct communication channels.

In some embodiments, the step S102 may be implemented as: determining one or more selected resource block sets and sending direct communication channels located on the one or more selected resource block sets among the M direct communication channels.

For the relevant content of the one or more resource block sets, please refer to the description in the step S101, which will not be repeated here.

In the direct communication method provided by the embodiments of the present disclosure, selecting suitable direct communication channels (e.g., the M direct communication channels) for sending from direct communication channels to be sent (e.g., the N direct communication channels) according to a sorting order within a channel occupancy time of direct communication, improves the communication efficiency.

It can be seen that the above text illustrates the channel selection method of the first terminal when sending the direct communication channels. In a case where a plurality of direct communication channels overlap in a time domain, and for example, in a case where the direct communication channels to be sent by the first terminal and the direct communication channels to be received by the first terminal overlap in the time domain, as shown in FIG. 5, the first terminal may determine whether to perform a sending operation or a receiving operation according to the following step S201 to step S203.

S201: in a case where a plurality of direct communication channels overlap in a time domain, selecting a target direct communication channel that meets a preset condition from the plurality of direct communication channels.

The plurality of direct communication channels include the N direct communication channels to be sent and P direct communication channels to be received, and P is a positive integer.

In some embodiments, the overlapping of the plurality of direct communication channels in the time domain includes that: the overlapping of at least two of the direct communication channels in the time domain may be partial overlapping or full overlapping. Exemplarily, the partial overlapping of two direct communication channels in the time domain may mean that at least one symbol among symbols occupied by the two direct communication channels is overlapped. The full overlapping of the two direct communication channels in the time domain may mean that symbols occupied by the two direct communication channels fully overlap. This is not limited thereto.

In some embodiments, the preset condition includes at least one of the following condition 1-1 and condition 1-2.

Condition 1-1: in a case where the plurality of direct communication channels include at least one direct communication channel carrying HARQ-ACK, the target direct communication channel is a direct communication channel with a highest priority among the at least one direct communication channel carrying HARQ-ACK.

Condition 1-2: in a case where the plurality of direct communication channels are all direct communication channels carrying conflict information, the target direct communication channel is a direct communication channel with a highest priority among the plurality of direct communication channels.

In some embodiments, in a case where the first terminal is a terminal that shares the channel occupancy time, the preset condition includes at least one of the following condition 2-1 to condition 2-4.

Condition 2-1: in a case where the plurality of direct communication channels include at least one first-type direct communication channel, the target direct communication channel is a direct communication channel with a highest priority among the at least one first-type direct communication channel, where the first-type direct communication channel is a direct communication channel related to a second terminal and carrying HARQ-ACK, and the second terminal is a terminal that starts the channel occupancy time.

Condition 2-2: in a case where the plurality of direct communication channels do not include the first-type direct communication channel, and the plurality of direct communication channels include at least one second-type direct communication channel, the target direct communication channel is a direct communication channel with a highest priority among the at least one second-type direct communication channel, where the second-type direct communication channel is a direct communication channel related to the second terminal and carrying conflict information.

Condition 2-3: in a case where the plurality of direct communication channels do not include the first-type direct communication channel and the second-type direct communication channel, and the plurality of direct communication channels include at least one third-type direct communication channel, the target direct communication channel is a direct communication channel with a highest priority among the at least one third-type direct communication channel, where the third-type direct communication channel is a direct communication channel unrelated to the second terminal and carrying HARQ-ACK.

Condition 2-4: in a case where the plurality of direct communication channels do not include the first-type direct communication channel, the second-type direct communication channel and the third-type direct communication channel, and the plurality of direct communication channels include at least one fourth-type direct communication channel, the target direct communication channel is a direct communication channel with a highest priority among the at least one fourth-type direct communication channel, where the fourth-type direct communication channel is a direct communication channel unrelated to the second terminal and carrying conflict information.

In some embodiments, the direct communication channels to be received being related to the second terminal, satisfies at least one of the following situations.

Situation 1-1: a sending end of the direct communication channels to be received is the second terminal.

Situation 2-2: a sending end of the direct communication channels to be received is a terminal in a group to which the second terminal belongs.

Situation 2-3: a receiving end of a physical sidelink control channel associated with the direct communication channels to be received includes the second terminal.

It should be understood that there may be other descriptions for situation 2-1 to situation 2-3, and the present disclosure does not impose any specific limitation on this.

S202: in a case where the target direct communication channel belongs to the direct communication channels to be sent, perform a sending operation.

In some embodiments, the step S202 may be implemented as: in the case where the target direct communication channel belongs to the direct communication channels to be sent, sending the N direct communication channels to be sent.

In some other embodiments, the step S202 may be implemented as: in the case where the target direct communication channel belongs to the direct communication channels to be sent, selecting M direct communication channels from N direct communication channels to be sent based on a sorting order of the N direct communication channels, within the channel occupancy time. Herein, for the determining method of the M direct communication channels, please refer to the description above, which will not be repeated here.

S203: in a case where the target direct communication channel belongs to the direct communication channels to be received, perform a receiving operation.

In some embodiments, the step S203 may be implemented as: in the case where the target direct communication channel belongs to the direct communication channels to be received, receive a part or all of the P direct communication channels to be received.

In some embodiments, in a case where the first terminal is a terminal that shares the channel occupancy time and the second terminal is a terminal that starts the channel occupancy time, the first terminal may determine whether to receive a direct communication channel unrelated to the second terminal, based on second information. Exemplarily, the above method further includes: acquiring second information, where the second information is used to configure whether the first terminal is allowed to receive a direct communication channel unrelated to the second terminal.

As an example, in a case where the P direct communication channels only include direct communication channels unrelated to the second terminal, if the second information indicates that the first terminal is not allowed to receive a direct communication channel unrelated to the second terminal, the first terminal abandons receiving the P direct communication channels.

As another example, in a case where the P direct communication channels include both direct communication channels unrelated to the second terminal and direct communication channels related to the second terminal, if the second information indicates that the first terminal is not allowed to receive a direct communication channel unrelated to the second terminal, the first terminal only receives direct communication channels related to the second terminal among the P direct communication channels, or the first terminal abandons receiving the P direct communication channels.

Taking the first-type direct communication channel to the fourth-type direct communication channel shown above as an example, in a case where the second information indicates that the first terminal is allowed to receive a direct communication channel unrelated to the second terminal, the first terminal may receive all types of the first-type direct communication channel, the second-type direct communication channel, the third-type direct communication channel and the fourth-type direct communication channel. In a case where the second information indicates that the first terminal is not allowed to receive a direct communication channel unrelated to the second terminal, the first terminal may receive the first-type direct communication channel and the second-type direct communication channel.

In some embodiments, in a case where the first terminal is a terminal that shares the channel occupancy time and the second terminal is a terminal that starts the channel occupancy time, if the number of direct communication channels that the first terminal can simultaneously receive is Q, the first terminal selects Q direct communication channels for receiving according to the receiving levels from high to low. Herein, the determining rules of the receiving levels are consistent with those of the above-mentioned transmission levels for sending, and the receiving levels may satisfy at least one of the following Rule C and Rule D.

Rule C: the receiving levels of direct communication channels are divided into N3 receiving levels according to the degree of relevance to the second terminal, where the second terminal is a terminal that starts the channel occupancy time.

Rule D: the receiving levels of direct communication channels are divided into N4 receiving levels according to the importance of contents carried by the direct communication channels.

As an instance, when the above-mentioned Rule C and Rule D are used at the same time, the above-mentioned Rule C may be prioritized over Rule D. As another instance, when the above-mentioned Rule C and Rule D are used at the same time, the above-mentioned Rule D may be prioritized over Rule C.

Taking the first-type direct communication channel to the fourth-type direct communication channel shown above as an example, when selecting the Q direct communication channels to be received, the first terminal prioritizes receiving a direct communication channel related to the second terminal and carrying HARQ-ACK (that is, the first-type direct communication channel), and then considers receiving a direct communication channel related to the second terminal and carrying conflict information (that is, the second-type direct communication channel), and then considers the third-type direct communication channel and the fourth-type direct communication channel in sequence.

It should be understood that the step S201 to the step S203 show that in a case where the first terminal needs to both send a channel and receive a channel within a channel occupancy time, the first terminal determines whether to prioritize the sending operation or the receiving operation based on the target direct communication channel.

In some other embodiments, the first terminal determines whether to prioritize the sending operation or the receiving operation, based on a pre-configuration, a configuration of the second terminal or a configuration of the network device (e.g., which is configured via a pre-configuration signaling or a configuration signaling). For example, the first terminal may determine whether to prioritize the sending operation or the receiving operation within a time domain feedback occasion, based on third information, where the third information may be pre-configured by the first terminal; alternatively, the third information may also be configured by the network device, and for example, the network device may send a configuration signaling or a pre-configuration instruction carrying the third information to the first terminal; alternatively, the third information may also be configured by the second terminal.

The above introduces the solutions of the embodiments of the present disclosure mainly from the perspective of the method. A communication apparatus is also shown below, which is used to perform the direct communication method in any of the above embodiments and possible implementations thereof. It can be understood that the communication apparatus includes the corresponding hardware structures and/or software modules for performing various functions in order to achieve the above-mentioned functions. Those skilled in the art should easily recognize that the present disclosure can be implemented in the form of hardware or a combination of hardware and computer software, in conjunction with the algorithm steps of various examples described in the embodiments of the present disclosure. Whether a certain function is performed via hardware or computer software driving hardware, depends on the specific application and restrictive conditions on design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. It should be understood that the above-mentioned modules may also be referred to as units. The example in which each functional unit may be divided corresponding to each function is taken for explanation below.

FIG. 6 is a structural schematic diagram of a communication apparatus provided by the embodiments of the present disclosure. With reference to FIG. 6, the communication apparatus 200 includes a communication module 201 and a processing module 202.

In some embodiments, the processing module 202 is configured to select M direct communication channels from N direct communication channels to be sent based on a sorting order of the N direct communication channels, within a channel occupancy time, where N is a positive integer, and M is a positive integer less than or equal to N.

In some embodiments, the communication module 201 is configured to send the M direct communication channels.

In some embodiments, the M direct communication channels are first M direct communication channels in the sorting order of the N direct communication channels; where the sorting order is obtained by sorting the N direct communication channels based on priorities and transmission levels; a direct communication channel with a higher transmission level is located before a direct communication channel with a lower transmission level in the sorting order; and for two direct communication channels with a same transmission level, a direct communication channel with a higher priority is located before a direct communication channel with a lower priority in the sorting order.

In some embodiments, in a case where the first terminal is a terminal that shares the channel occupancy time, the transmission levels satisfy at least one of: a rule that a transmission level of a direct communication channel related to a second terminal is higher than a transmission level of a direct communication channel unrelated to the second terminal, where the second terminal is a terminal that starts the channel occupancy time; and a rule that a transmission level of a direct communication channel carrying hybrid automatic repeat request-ACK (HARQ-ACK) is higher than a transmission level of a direct communication channel carrying conflict information.

In some embodiments, the communication module 201 may be configured to send the M direct communication channels in a case where the M direct communication channels include a direct communication channel related to the second terminal.

In some embodiments, the communication module 201 is further configured to acquire first information, where the first information is used to configure whether the first terminal is allowed to send a direct communication channel unrelated to the second terminal.

In some embodiments, the direct communication channel to be sent being related to the second terminal, satisfies at least one of: a situation that a receiving end of the direct communication channel to be sent includes the second terminal; a situation that a receiving end of the direct communication channel to be sent is a terminal in a group to which the second terminal belongs; a situation that a receiving end of the direct communication channel to be sent is a terminal having a resource conflict with the second terminal; and a situation that the direct communication channel to be sent is used to respond to a multicast transmission.

In some embodiments, in a case where the first terminal is a terminal that starts the channel occupancy time, the transmission levels satisfy a rule that: a transmission level of a direct communication channel carrying HARQ-ACK is higher than a transmission level of a direct communication channel carrying conflict information.

In some embodiments, power required for sending the M direct communication channels is less than or equal to maximum transmission power of the first terminal, and M is less than or equal to a maximum number of direct communication channels supported by the first terminal to send simultaneously.

In some embodiments, the N direct communication channels include all direct communication channels to be sent by the first terminal; or the N direct communication channels include all direct communication channels to be sent by the first terminal within a bandwidth corresponding to the channel occupancy time; or the N direct communication channels include all direct communication channels to be sent by the first terminal in one or more resource block sets.

In some embodiments, the one or more resource block sets satisfy at least one of: a condition that the one or more resource block sets are resource block sets detected as idle by the first terminal; a condition that the one or more resource block sets belong to a bandwidth corresponding to the channel occupancy time; a condition that the one or more resource block sets are continuous in a frequency domain; and a condition that the one or more resource block sets at least include a direct communication channel related to a second terminal, where the second terminal is a terminal that starts the channel occupancy time.

In some embodiments, the processing module 202 is further configured to select a target direct communication channel that meets a preset condition from the plurality of direct communication channels in a case where a plurality of direct communication channels overlap in a time domain, where the plurality of direct communication channels include the N direct communication channels to be sent and P direct communication channels to be received, and P is a positive integer.

In some embodiments, the communication module 201 is further configured to perform a sending operation in a case where the target direct communication channel belongs to the direct communication channels to be sent.

In some embodiments, the communication module 201 is further configured to perform a receiving operation in a case where the target direct communication channel belongs to the direct communication channels to be received.

In some embodiments, the preset condition includes at least one of condition 1-1 and condition 1-2. Condition 1-1 to condition 1-2 may refer to the description above and will not be repeated here.

In some embodiments, in a case where the first terminal is a terminal that shares the channel occupancy time, the preset condition includes at least one of condition 2-1 to condition 2-4. Condition 2-1 to condition 2-4 may refer to the description above and will not be repeated here.

In some embodiments, the direct communication channels to be received being related to the second terminal satisfies at least one of: a situation that a sending end of the direct communication channels to be received is the second terminal; a situation that a sending end of the direct communication channels to be received is a terminal in a group to which the second terminal belongs; and a situation that a receiving end of a physical sidelink control channel associated with the direct communication channels to be received includes the second terminal.

In some embodiments, the direct communication channels to be received being related to the second terminal satisfies at least one of: a situation that a sending end of the direct communication channels to be received is the second terminal; a situation that a sending end of the direct communication channels to be received is a terminal in a group to which the second terminal belongs; and a situation that a receiving end of a physical sidelink control channel associated with the direct communication channels to be received includes the second terminal.

In some embodiments, the direct communication channels include at least one type as follows: a physical sidelink control channel, a physical sidelink sharing channel, a physical sidelink feedback channel, a direct synchronization channel, and a direct reference channel.

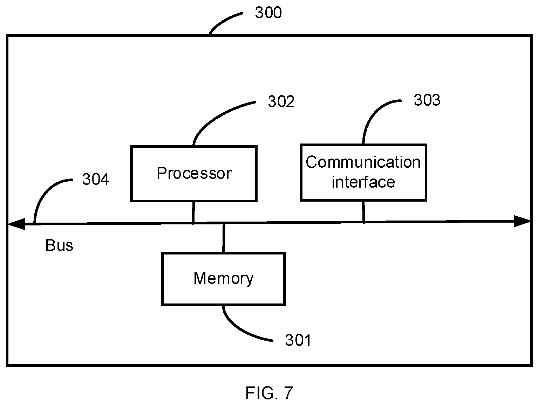

In a case where the functions of the above-mentioned integrated modules are implemented in the form of hardware, the embodiments of the present disclosure further provide a possible structure of a communication apparatus, and the communication apparatus is configured to perform the direct communication method provided by the embodiments of the present disclosure. As shown in FIG. 7, the communication apparatus 300 includes a processor 302. In some examples, the communication apparatus may further include at least one of a communication interface 303, a bus 304 and a memory 301.

The processor 302 may be modules and circuits that implement or perform various exemplary logical blocks described in conjunction with the embodiments of the present disclosure. The processor 302 may be a central processing unit, a general-purpose processor, a digital signal processor, an application specific integrated circuit, a field programmable gate array or other programmable logic devices, a transistor logic device, a hardware component or any combination thereof. It may implement or perform various exemplary logical blocks described in conjunction with the embodiments of the present disclosure. The processor 302 may also be a combination that implements computing functions, for example, including a combination of one or more microprocessors, a combination of a digital signal processor (DSP) and a microprocessor, or the like.

The communication interface 303 is configured to connect with other devices via a communication network. The communication network may be an Ethernet, a radio access network, a wireless local area network (WLAN), or the like.

The memory 301 may be, but not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 301 may exist independently of the processor 302, and the memory 301 may be connected to the processor 302 via the bus 304 and is used for storing instructions or program codes executable by the processor 302, such as computer program instructions. The processor 302, when calling and executing the instructions or program codes stored in the memory 301, is capable of implementing the direct communication method provided by the embodiments of the present disclosure.

In another possible implementation, the memory 301 may also be integrated with the processor 302.

The bus 304 may be an extended industry standard architecture (EISA) bus or the like. Buses 304 may be divided into address buses, data buses, control buses, and the like. For the convenience of representation, only one thick line is used in FIG. 7 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein that, when running on a computer (such as the above-mentioned communication apparatus and the processor thereof, etc.), cause the computer to perform the direct communication method as described in any of the above-mentioned embodiments. It should be understood that the present disclosure does not limit the specific form of the computer.

In some examples, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine-readable storage medium" may include, but be not limited to, a wireless channel and various other media capable of storing, containing, and/or carrying instructions and/or data.

Some embodiments of the present disclosure provide a computer program product including instructions, and the computer program product, when running on a computer, causes the computer to perform the direct communication method as described in any of the above-mentioned embodiments.

The foregoing is only the specific embodiments of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be determined based on the protection scope of claims.

## Claims

1. A direct communication method, **characterized in that** the method is applied to a first terminal, and the method comprises:

selecting M direct communication channels from N direct communication channels to be sent based on a sorting order of the N direct communication channels, within a channel occupancy time, wherein N is a positive integer, and M is a positive integer less than or equal to N; and

sending the M direct communication channels.

2. The method according to claim 1, wherein the M direct communication channels are first M direct communication channels in the sorting order of the N direct communication channels; and

wherein the sorting order is obtained by sorting the N direct communication channels based on priorities and transmission levels; a direct communication channel with a higher transmission level is located before a direct communication channel with a lower transmission level in the sorting order; and for two direct communication channels with a same transmission level, a direct communication channel with a higher priority is located before a direct communication channel with a lower priority in the sorting order.

3. The method according to claim 2, wherein in a case where the first terminal is a terminal that shares the channel occupancy time, the transmission levels satisfy at least one of:

a rule that a transmission level of a direct communication channel related to a second terminal is higher than a transmission level of a direct communication channel unrelated to the second terminal, wherein the second terminal is a terminal that starts the channel occupancy time; and

a rule that a transmission level of a direct communication channel carrying hybrid automatic repeat request-ACK (HARQ-ACK) is higher than a transmission level of a direct communication channel carrying conflict information.

4. The method according to claim 3, wherein sending the M direct communication channels, comprises:

in a case where the M direct communication channels comprise a direct communication channel related to the second terminal, sending the M direct communication channels.

5. The method according to claim 3, wherein the method further comprises:

acquiring first information, wherein the first information is used to configure whether the first terminal is allowed to send a direct communication channel unrelated to the second terminal.

6. The method according to any one of claims 3 to 5, wherein the direct communication channel to be sent being related to the second terminal, satisfies at least one of:

a situation that a receiving end of the direct communication channel to be sent comprises the second terminal;

a situation that a receiving end of the direct communication channel to be sent is a terminal in a group to which the second terminal belongs;

a situation that a receiving end of the direct communication channel to be sent is a terminal having a resource conflict with the second terminal; and

a situation that the direct communication channel to be sent is used to respond to a multicast transmission.

7. The method according to claim 2, wherein in a case where the first terminal is a terminal that starts the channel occupancy time, the transmission levels satisfy a rule that:

a transmission level of a direct communication channel carrying HARQ-ACK is higher than a transmission level of a direct communication channel carrying conflict information.

8. The method according to claim 1, wherein power required for sending the M direct communication channels is less than or equal to maximum transmission power of the first terminal, and M is less than or equal to a maximum number of direct communication channels supported by the first terminal to send simultaneously.

9. The method according to claim 1, wherein

the N direct communication channels comprise all direct communication channels to be sent by the first terminal; or

the N direct communication channels comprise all direct communication channels to be sent by the first terminal within a bandwidth corresponding to the channel occupancy time; or

the N direct communication channels comprise all direct communication channels to be sent by the first terminal in one or more resource block sets.

**10.** The method according to claim 9, wherein the one or more resource block sets satisfy at least one of:

a condition that the one or more resource block sets are resource block sets detected as idle by the first terminal;

a condition that the one or more resource block sets belong to a bandwidth corresponding to the channel occupancy time;

a condition that the one or more resource block sets are continuous in a frequency domain; and

a condition that the one or more resource block sets at least comprise a direct communication channel related to a second terminal, wherein the second terminal is a terminal that starts the channel occupancy time.

**11.** The method according to claim 1, further comprising:

in a case where a plurality of direct communication channels overlap in a time domain, selecting a target direct communication channel that meets a preset condition from the plurality of direct communication channels, wherein the plurality of direct communication channels comprise the N direct communication channels to be sent and P direct communication channels to be received, and P is a positive integer;

in a case where the target direct communication channel belongs to the direct communication channels to be sent, performing a sending operation;

in a case where the target direct communication channel belongs to the direct communication channels to be received, performing a receiving operation.

**12.** The method according to claim 11, wherein the preset condition comprises at least one of:

a condition that in a case where the plurality of direct communication channels comprise at least one direct communication channel carrying HARQ-ACK, the target direct communication channel is a direct communication channel with a highest priority among the at least one direct communication channel carrying HARQ-ACK; or

a condition that in a case where the plurality of direct communication channels are all direct communication channels carrying conflict information, the target direct communication channel is a direct communication channel with a highest priority among the plurality of direct communication channels.

**13.** The method according to claim 11, wherein in a case where the first terminal is a terminal that shares the channel occupancy time, the preset condition comprises at least one of:

a condition that in a case where the plurality of direct communication channels comprise at least one first-type direct communication channel, the target direct communication channel is a direct communication channel with a highest priority among the at least one first-type direct communication channel, wherein the first-type direct communication channel is a direct communication channel related to a second terminal and carrying HARQ-ACK, and the second terminal is a terminal that starts the channel occupancy time; or

a condition that in a case where the plurality of direct communication channels do not comprise the first-type direct communication channel, and the plurality of direct communication channels comprise at least one second-type direct communication channel, the target direct communication channel is a direct communication channel with a highest priority among the at least one second-type direct communication channel, wherein the second-type direct communication channel is a direct communication channel related to the second terminal and carrying conflict information;

a condition that in a case where the plurality of direct communication channels do not comprise the first-type direct communication channel and the second-type direct communication channel, and the plurality of direct communication channels comprise at least one third-type direct communication channel, the target direct communication channel is a direct communication channel with a highest priority among the at least one third-type direct communication channel, wherein the third-type direct communication channel is a direct communication channel unrelated to the second terminal and carrying HARQ-ACK; or

a condition that in a case where the plurality of direct communication channels do not comprise the first-type direct communication channel, the second-type direct communication channel and the third-type direct communication channel, and the plurality of direct communication channels comprise at least one fourth-type direct communication channel, the target direct communication channel is a direct communication channel with a highest priority among the at least one fourth-type direct communication channel, wherein the fourth-type direct communication channel is a direct communication channel unrelated to the second terminal and carrying conflict information.

**14.** The method according to claim 13, wherein the direct communication channels to be received being related to the second terminal, satisfies at least one of:

a situation that a sending end of the direct communication channels to be received is the second terminal;
a situation that a sending end of the direct communication channels to be received is a terminal in a group to which the second terminal belongs; and
a situation that a receiving end of a physical sidelink control channel associated with the direct communication channels to be received comprises the second terminal.

15. The method according to claim 1, wherein the direct communication channels comprise at least one type as follows: a physical sidelink control channel, a physical sidelink sharing channel, a physical sidelink feedback channel, a direct synchronization channel, and a direct reference channel.

16. A communication apparatus, **characterized by** comprising a memory, a processor, and computer program instructions that are stored on the memory and executable on the processor, wherein the processor, when executing the computer program instructions, implements the direct communication method according to any one of claims 1 to 15.

17. A computer readable storage medium, **characterized in that** the computer readable storage medium comprises computer program instructions;
wherein the computer program instructions, when executed on a computer, cause the computer to perform the direct communication method according to any one of claims 1 to 15.

FIG. 1

FIG. 2

FIG. 3

LTE PSCCH/PSSCH

CF

F1

NR PSCCH/PSSCH

FIG. 4

In a case where a plurality of direct communication channels overlap in a time domain, select a target direct communication channel that meets a preset condition from the plurality of direct communication channels — S201

In a case where the target direct communication channel belongs to the direct communication channels to be sent, perform a sending operation — S202

In a case where the target direct communication channel belongs to the direct communication channels to be received, perform a receiving operation — S203

FIG. 5

Communication apparatus 200

communication module — 201

processing module — 202

FIG. 6

300

302

303

Processor

Communication
interface

304

Bus

Memory

301

FIG. 7

## INTERNATIONAL SEARCH REPORT

| | International application No. |
|---|---|
| | **PCT/CN2024/070676** |

**A. CLASSIFICATION OF SUBJECT MATTER**

H04W72/12(2023.01)i

According to International Patent Classification (IPC) or to both national classification and IPC

**B. FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

3GPP, CNTXT, DWPI, ENTXT, WPABS: 信道, 通道, 链路, 优先级, 排序, 选择, 选取, V2V, V2X, D2D, 直接链路, 侧链路, 直连, 群, 组, 多个, 终端, 同时, 发送, 信道, 数量 , 数目, 反馈, UE, channel, link, direct, group, multiple, number, priority, order, select+, feedback, HARQ

**C. DOCUMENTS CONSIDERED TO BE RELEVANT**

| Category* | Citation of document, with indication, where appropriate, of the relevant passages | Relevant to claim No. |
|---|---|---|
| X | CN 113892277 A (NTT DOCOMO INC.) 04 January 2022 (2022-01-04) description, paragraphs 75-97 and 175-184, and figures 9A-12 | 1-17 |
| X | CN 113906807 A (GUANGDONG OPPO MOBILE COMMUNICATIONS CO., LTD.) 07 January 2022 (2022-01-07) description, paragraphs 53-116 | 1-17 |
| A | CN 111294940 A (SPREADTRUM COMMUNICATIONS (SHANGHAI) CO., LTD.) 16 June 2020 (2020-06-16) entire document | 1-17 |
| A | US 2021092783 A1 (QUALCOMM INC.) 25 March 2021 (2021-03-25) entire document | 1-17 |
| A | ERICSSON. "Mode-1 Implications for Supporting SL HARQ CSI feedbacks" *3GPP TSG-RAN WG2 #103-BIS TDOC R2-1815036*, 12 October 2018 (2018-10-12), sections 2-3 | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 March 2024** | **22 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070676**

| Patent document cited in search report | | | Publication date (day/month/year) | Patent family member(s) | | | Publication date (day/month/year) |
|---|---|---|---|---|---|---|---|
| CN | 113892277 | A | 04 January 2022 | WO | 2020245896 | A1 | 10 December 2020 |
| | | | | EP | 3979678 | A1 | 06 April 2022 |
| | | | | US | 2022232520 | A1 | 21 July 2022 |
| | | | | BR | 112021024022 | A2 | 01 February 2022 |
| CN | 113906807 | A | 07 January 2022 | EP | 4017182 | A1 | 22 June 2022 |
| | | | | WO | 2021072770 | A1 | 22 April 2021 |
| | | | | JP | 2022552100 | A | 15 December 2022 |
| | | | | WO | 2021073032 | A1 | 22 April 2021 |
| | | | | BR | 112022006083 | A2 | 21 June 2022 |
| | | | | KR | 20220084027 | A | 21 June 2022 |
| | | | | US | 2022239416 | A1 | 28 July 2022 |
| | | | | IN | 202227014457 | A | 29 July 2022 |
| | | | | RU | 2810319 | C1 | 26 December 2023 |
| | | | | VN | 87809 | A | 25 July 2022 |
| | | | | CN | 114513856 | A | 17 May 2022 |
| CN | 111294940 | A | 16 June 2020 | None | | | |
| US | 2021092783 | A1 | 25 March 2021 | EP | 4035468 | A1 | 03 August 2022 |
| | | | | WO | 2021061880 | A1 | 01 April 2021 |
| | | | | IN | 202227009579 | A | 08 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310094391